# EUROPÄISCHE PATENTSCHRIFT

(11) **EP 1 691 095 B1**
(45) Veröffentlichungstag und Bekanntmachung des Hinweises auf die Patenterteilung: **22.10.2008**
(21) Anmeldenummer: 05100987.6
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221, Düsseldorf (DE)
(74) Vertreter: Drömer, Hans-Carsten

(56) Entgegenhaltungen:
- EP-B- 0 563 940
- FR-A- 2 568 329
- US-A- 5 551 919

## Beschreibung

Die Erfindung betrifft ein Kardangelenk, das zwei Gelenkgabeln aufweist, wobei eine der Gelenkgabein mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabein um 90° radial verdreht zueinander angeordnet sind, so daß die beiden Gelenkgabeln einen Innenraum bilden, wobei dem Kardangelenk ein elastisches Kupplungselement zugeordnet ist.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist das Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering. Dies bewirkt eine Verzerrung der Hardyscheibe mit den Biegemomenten aus dem Kardangelenk, falls die Hardyscheibe wie üblich in Serie mit dem Kardangelenk angeordnet ist. Da eine Hardyscheibe allein (ohne Kardangelenk) zumindest bei entsprechenden Standzeiten nicht geeignet ist, nicht fluchtende Wellen miteinander zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardyscheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale und radiale Freigängigkeit des Gelenks. Außerdem ist der axiale Bauraumbedarf optimierbar.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedem, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,

Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,

Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselementen auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne daß die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

Die US 5 551 919 A offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, daß dieses unter wirtschaftlichen Aspekten günstiger herstellbar ist, ohne daß das elastische Kupplungselement signifikante Biegemomente durchleiten muß.

Diese Aufgabe wird durch die Merkmale des Anspruchs 1 gelöst.

Die den Befestigungselementen zugeordneten Lagerelemente sind in der Lage zusätzlich zu den radialen und axialen Kräften ein Biegemoment für die fliegende Lagerung der Befestigungselemente aufzunehmen, wobei die Lagerelemente eine entsprechende Baulänge in radialer Richtung gesehen aufweisen sollten. Insbesondere durch eine identische Ausgestaltung der beiden Befestigungselemente, ist es möglich sowohl Lagerhaltungs- und/oder Bereitstellungskosten als auch Herstellungskosten zu senken, da eine Herstellung der jeweiligen, identischen Befestigungselemente mit einem Herstellungswerkzeug möglich ist. Damit müssen die identischen Befestigungselemente aber auch nicht mehr gesondert gelagert werden, was bei unterschiedlichen Bauteilen durchaus sinnvoll ist.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne daß Einbußen hinsichtlich einer Drehsteifigkeit in Kauf genommen werden müssen. Durch die Integration der Elastizität durch das zweifach drehbar gelagerte elastische Kupplungselement in das Kardangelenk wird vermieden, daß neben einer axialen Nachgiebigkeit auch eine Biegesteifigkeit bereitgestellt werden muß. Mittels des erfindungsgemäßen Kardangelenkes kann die axiale Nachgiebigkeit größer ausgeführt werden, so daß auch Isolationseigenschaften gegenüber herkömmlichen elastischen Kupplungen in Lenksäulenkonstruktionen verbessert sind. Das integrierte elastische Kupplungselement muß keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall des sonst üblichen Verschiebegelenkes in der Lenksäule, welches Einbautoleranzen und Straßenanregungen kompensieren muß, begünstigen Weiter kann das erfindungsgemäße Kardangelenk, wenn mit einer Scheibe ausgeführt, mit vergleichsweise großen Gabelweiten und vorteilhaft mit entsprechend klein bemessenen Gabellagern in einer sinnvollen Baugröße hergestellt werden, wobei wesentlich höhere Drehmomente übertragbar sind, als bei einem Kardangelenk mit kleinen Gabelweiten und größeren (teureren) Gabellagern. Weiter erlaubt die erfindungsgemäße Integration des Ringes ein einfaches Zuführen des flexiblen Ringes in axialer Richtung.

Aus der fliegenden Lagerung der Befestigungselemente ergibt sich eine große axiale Freigängigkeit des Gelenks, die nur noch durch die Nachgiebigkeitscharakteristik des flexiblen Elementes eingestellt wird. Ebenso erfordert das erfindungsgemäße Kardangelenk ein Minimum an axialem Bauraumbedarf, da der Zapfenträger im Innenraum gradlinig zwischen den beiden Lagerstellen der Gabeln ausgeführt werden kann.

Weitere vorteilhafte Ausgestaltungen der Erfindung sind in den Unteransprüchen und in der folgenden Figurenbeschreibung offenbart. Es zeigen:
- Fig. 1: Eine Seitenansicht eines Kardangelenks,
- Fig. 2: eine Darstellung entlang des Schnittes A aus Figur 1,
- Fig. 3: einen beispielhaften Zapfenträger, im Längsschnitt gesehen.
- Fig. 4: eine Seitenansicht eines Kardangelenks in einer zweiten Ausführung,
- Fig. 5: eine Darstellung entlang des Schnittes A aus Figur 4, und
- Fig. 6: einen weiteren beispielhaften Zapfenträger im Längsschnitt gesehen.

In den unterschiedlichen Figuren sind gleiche Teile stets mit demselben Bezugszeichen versehen, so daß diese in der Regel auch nur einmal beschrieben werden.

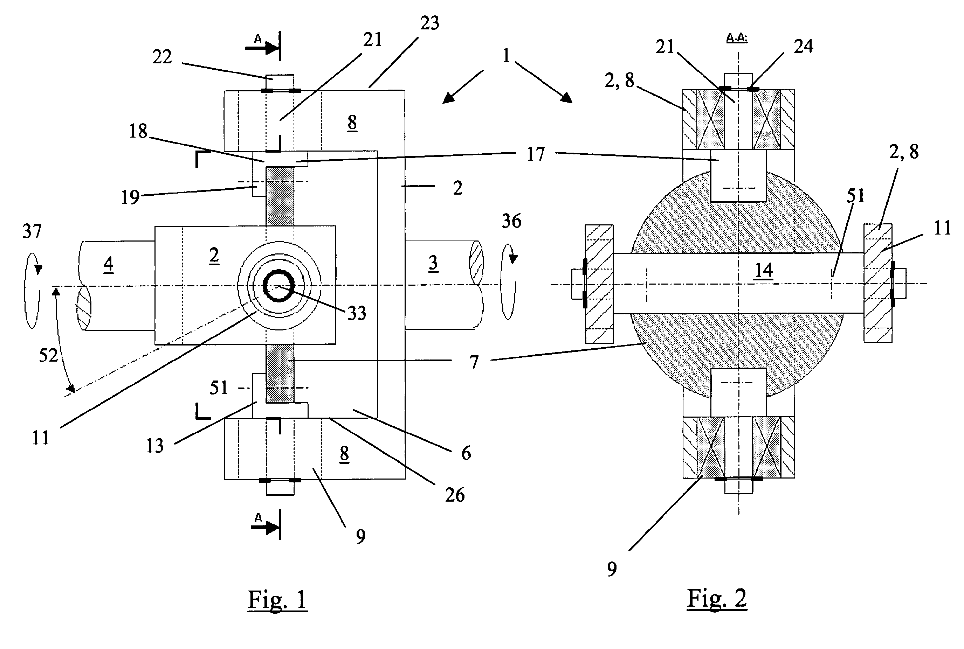

Die Figuren 1 und 2 zeigen ein Kardangelenk 1, das zwei Gelenkgabein 2 aufweist. Eine der Gelenkgabeln 2 ist mit einer angetriebenen Welle 3 bzw. Antriebswelle 3 verbunden, wobei die andere Gelenkgabel 2 mit einer anzutreibenden Welle 4 bzw. Abtriebswelle 4 verbunden ist. Die beiden Gelenkgabeln 2 sind um 90° radial verdreht zueinander angeordnet, so daß die beiden Gelenkgabeln 2 einen Innenraum 6 bilden. Dem Kardangelenk 1 ist ein elastisches Kupplungselement 7 zugeordnet. Den Gelenkgabeln 2 sind an ihren jeweils axial gegenüberliegenden Gabelschenkeln 8 Lagerelemente 9, 11 zugeordnet. In einer der Gelenkgabeln 2 bzw. deren axial gegenüberliegenden Gabelschenkeln 8 ist jeweils ein Befestigungselement 13 drehbar gelagert, wobei in der anderen Gelenkgabel 2 bzw. deren Gabelschenkeln 8 ein Zapfenträger 14 drehbar gelagert ist. Die Befestigungselemente 13 und der Zapfenträger 14 sind über das elastische Kupplungselement 7 miteinander verbunden.

Die Lagerelemente 9, welche den Befestigungselementen 13 zugeordnet sind, sind zur fliegenden Lagerung der Befestigungselemente 13 bevorzugt derart ausgestaltet, daß diese ein Biegemoment aufnehmen können. Daher sind die Lagerelemente 9 bevorzugt als doppelreihige Wälzlager beispielsweise als zweireihiges Kugellager ausgeführt. Die Lagerelemente 9 können aber auch als breites Gleitlager ausgeführt sein, wobei die Lagerelemente 11, welche dem Zapfenträger 14 zugeordnet sind, als einreihige Lager ausgeführt sind. Die Lagerelemente 11 können beispielsweise als Wälzlager, z. B. als Nadel- oder Kugellager ausgeführt sein, wobei die Lagerelemente 11 selbstverständlich auch als Gleitlager ausgeführt sein können.

Die Lagerelemente 9 und 11 werden geeignet radial zur Gelenkachse in den Gelenkgabeln 2 bzw. deren Gabelschenkeln 8 fixiert. Mögliche Ausführungsformen sind zum Beispiel Preßpassung, Klebung oder Formschluß (Schulteranlage, Springring oder dergleichen) der Lageraußenringe in den Gelenkgabeln 2 bzw. deren Gabelschenkeln 8.

Dem Kardangelenk 1 sind entsprechend der Anzahl der Gabelschenkel 8 zwei Befestigungselemente 13 zugeordnet, die einander identisch sind, weswegen nachfolgend lediglich eines beschrieben wird.

Das Befestigungselement 13 ist als Drehbolzen bzw. Ankerzapfen ausgeführt, und weist einen im Gelenklängsschnitt gesehen L-förmigen Bereich 17 mit einem Quersteg 18 und einem in den Figuren 1 und 2 radial nach innen weisenden, senkrecht zu dem Quersteg 18 angeordneten Basissteg 19 auf. Der L-förmige Bereich 17 geht in einen Zapfen 21 über, der in dem in den Figuren 1 und 2 dargestellten Ausführungsbeispiel mit seinem zum L-förmigen Bereich 17 gegenüberliegenden freien Ende 22 eine zum Innenraum 6 gegenüberliegenden Außenseite 23 der Gelenkgabeln 2, insbesondere der Gabelschenkel 8 bzw. der Lagerelemente 9 in radialer Richtung etwas überragt.

Dem freien Ende 22 ist ein Sicherungselement 24, vorzugsweise ein Wellensicherungsring zugeordnet, der in einer entsprechenden Nut gelagert ist. Die Nut ist an einer geeigneten Stelle in dem freien Ende 22 eingebracht.

Der Zapfen 21 ist entsprechend der Breite der Lagerelemente 9 in den jeweiligen Gelenkgabeln 2 ausgeführt, so daß das Befestigungselement 13 drehbar in den jeweiligen Gelenkgabeln 2 bzw. deren Gabelschenkeln 8 gelagert ist.

Die Befestigungselemente 13 sind in dem in den Figuren 1 und 2 dargestellten Ausführungsbeispiel mit ihren L-förmigen Bereichen 17 fliegend gelagert in dem Innenraum 6 angeordnet, und sind mit ihrem Quersteg 18 jeweils an einer zur Außenseite 23 der Gabelschenkel 8 gegenüberliegenden Innenseite 26 angeordnet. Der Quersteg 18 liegt jeweils an einer zur Innenseite 26 orientierten Seite der Lagerelemente 9 an. Die L-förmigen Bereiche 17 bzw. die Befestigungselemente 13 sind räumlich voneinander getrennt. Zur Verbindung der Befestigungselemente 13 ist das elastische Kupplungselement 7 vorgesehen.

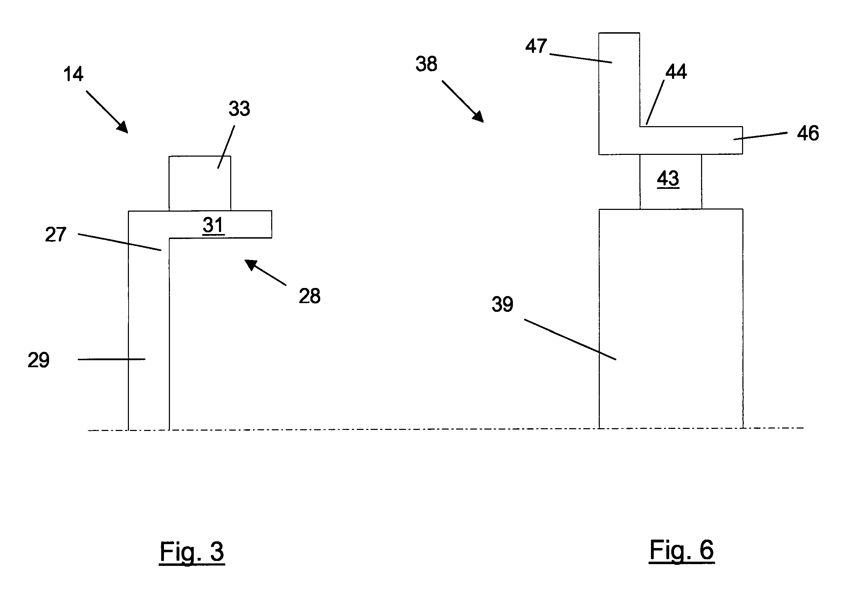

Der Zapfenträger 14 ist in einer bevorzugten Ausgestaltung beispielhaft in Figur 3 dargestellt, wobei Figur 3 lediglich eine Teilansicht bis zu einer Symmetrieachse X zeigt.

Der Zapfenträger 14 weist einen Basisschenkel 29 auf, an dem sich ein L-förmiger Fortsatz 28 mit einem Basissteg 27 und einem Anlageschenkel 31 anschließt, so daß der Zapfenträger 14 quasi U-förmig ausgestaltet ist.

Der Anlageschenkel 31 ist an der Innenseite 26 der zugeordneten Gelenkgabel 2 angeordnet, wobei ein Zapfen 33 des Zapfenträgers 14 die Lagerelemente 11 in der zugeordneten Gelenkgabel 2 durchgreift. Mit dem Anlageschenkel 31 liegt der Zapfenträger 14 an einer zur Innenseite 26 weisenden Seite des Lagerelementes 11 an.

Der Zapfen 33 ragt etwas über die Außenseite 23 der Gelenkgabel 2 hinaus, kann aber auch bündig mit der Außenseite 23 abschließen. Dem Zapfen 33 kann ein Sicherungselement 24, wie dem Befestigungselement 13 auch, zugeordnet sein.

Das elastische Kupplungselement 7 ist in dem in den Figuren 1 und 2 dargestellten Ausführungsbeispiel als Scheibe, bevorzugt als torsionssteife, biege-elastische bzw. axial elastische Scheibe, vorzugsweise als runde, vieleckige oder polygonale Hardy-Scheibe ausgestaltet und mit den Basisstegen 19 der Befestigungselemente 13 sowie dem Basissteg 27 des Zapfenträgers 14 in dem Innenraum 6 verbunden. Denkbar ist aber auch, daß das elastische Kupplungselement 7 in dem Ausführungsbeispiel nach den Figuren 1 und 2 als torsionssteifer, biege-elastischer bzw. axial elastischer Ring runder, vieleckiger oder polygonaler Ausprägung ausgestaltet ist. Das elastische Kupplungselement 7 besteht zum Beispiel aus einem Gummi und kann auch Verstärkungsschlingen oder -gewebe aus festerem metallischen oder nicht-metallischen Material in sich bergen. Als Verbindung mit dem jeweiligen Befestigungselement 13 und dem Zapfenträger 14 kann beispielsweise eine Schraubverbindung, Nietverbindung, Vulkanisierung oder dergleichen vorgesehen sein. Die Verbindung ist in den Figuren 1 und 2 prinzipiell mittels einer strichpunktierten Linie 51 dargestellt.

In dem Kardangelenk 1 wird beispielhaft ein Eingangsmoment (Drehrichtung 36) über die angetriebene Welle 3 (Antriebswelle) über die Gelenkgabel 2 auf das in ihr drehbar gelagerte Befestigungselementenpaar bzw. auf die in den gegenüberliegenden Gabelschenkeln 8 gelagerten Befestigungselemente 13 und von dort auf das elastische Kupplungselement 7 als Zug-/Druckspannung an den Zapfenträger 14 und dann weiter auf die Gelenkgabel 2 der anzutreibenden Welle 4 bzw. Abtriebswelle übertragen. Dies ist mittels des zum Eingangsmoment (Drehrichtung 36) gleichsinnigen Ausgangsmoments (Drehrichtung 37) dargestellt. Das elastische Kupplungselement 7 ist hinsichtlich der geringfügig erforderlichen Biegesteifigkeit derart gewählt, daß sichergestellt wird, daß eine Drehung der Zapfen 21 und 33 bei Neigung (Inklination 52) und Rotation der Gelenkgabel 2 stattfinden kann, um das Reibungsmoment gemäß der gewählten Lagerluft in den Lagern 9 und 11 zu überwinden. In axialer Richtung erlaubt das elastische Kupplungselement 7 so eine Nachgiebigkeit, die zur Isolation genutzt werden kann, während die Kontur des elastischen Kupplungselementes 7 eine hohe Drehsteifigkeit bereitstellt. Bei dem dargestellten Ausführungsbeispiel ist die Antriebswelle 3 in der Zeichnungsebene rechts dargestellt. Selbstverständlich kann die Antriebswelle 3 in der Zeichnungsebene auch links angeordnet sein. Natürlich können die Drehrichtungen 36 bzw. 37 auch entgegengesetzt zum dargestellten Drehsinn sein.

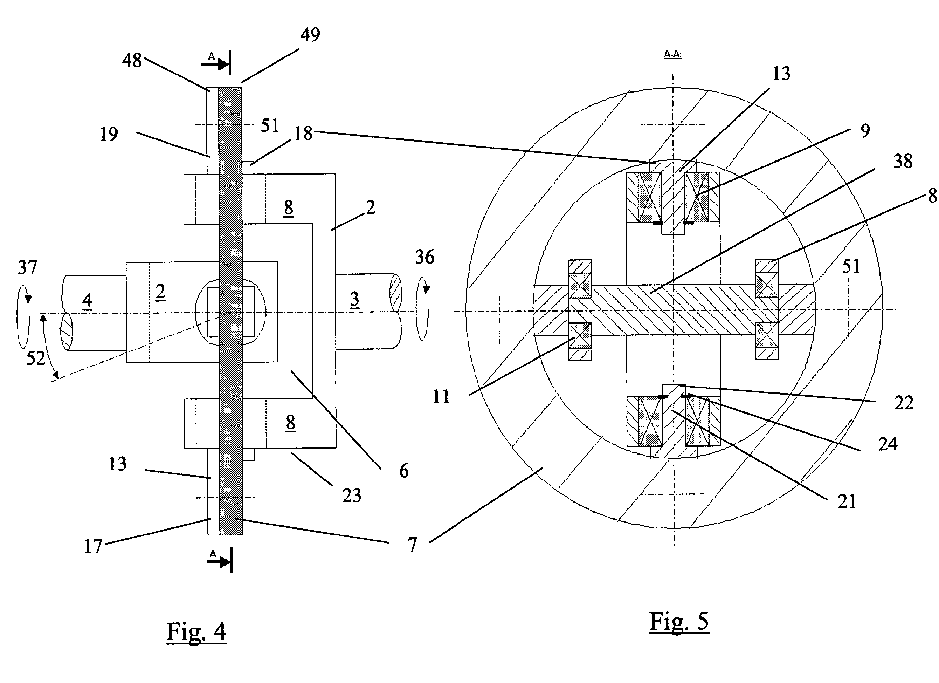

In den Figuren 4 und 5 ist ein weiteres Ausführungsbeispiel des erfindungsgemäßen Kardangelenks 1 dargestellt. Im Unterschied zu dem in den Figuren 1 und 2 dargestellten Ausführungsbeispiel sind die Befestigungselemente 13 mit ihrem L-förmigen Bereich 17 an der Außenseite 23 der Gelenkgabein 2 bzw. deren Gabelschenkel 8 angeordnet, so daß der Zapfen 21 mit seinem freien Ende 22 etwas in den Innenraum 6 hinein ragt, was in Figur 4 nicht erkennbar ist. Der Basissteg 19 ist hierbei radial nach außen orientiert. Der Quersteg 18 ist an der Außenseite 23 der Gelenkgabeln 2 bzw. der Gabelschenkel 8 angeordnet, und liegt an der zur Außenseite 23 orientierten Seite der Lagerelemente 9 an. Im Unterschied dazu ist daher ein Zapfenträger 38 im Vergleich mit dem in Figur 3 beschriebenen unterschiedlich ausgestaltet.

Der Zapfenträger 38 ist in einer bevorzugten Ausgestaltung beispielhaft in Figur 6 dargestellt, wobei Figur 6 lediglich eine Teilansicht bis zu einer Symmetrieachse X zeigt. Der Zapfenträger 38 (Figur 6) weist einen Basisschenkel 39 auf, an dem sich ein Lagerbereich 43 anschließt, der das in dem zugeordneten Gelenkgabelschenkel 8 angeordneten Lagerelement 11 durchgreift. Bezogen auf den Basisschenkel 39 ist der Lagerbereich 43 im Querschnitt gesehen dünner ausgestaltet, so daß der Zapfenträger 38 mit seinem Lagerbereich 43 radial an den Lagerelementen 11 anliegt. Der Lagerbereich 43 schließt bevorzugt bündig mit der Außenseite 23 der zugeordneten Gelenkgabel 2 ab, kann aber auch etwas überstehen oder unterstehen, wobei sichergestellt werden muß, daß das Lager 11 axial in der Lagerachse (radial zur Gelenkachse) auf dem Zapfenträger 38 zum Beispiel durch Formschluß (einseitiger bzw. zweiseitiger Schulterschluß, wie gezeigt in den Figuren 4 und oder durch Preßpassung, Klebung oder ähnlicher Fixierung festgelegt ist. An den Lagerbereich 43 schließt sich ein Befestigungsbereich 44 an, der im Querschnitt gesehen im Wesentlichen L-förmig mit einem Quersteg 46 und einem radial nach außen gerichteten, senkrecht zu dem Quersteg 46 angeordneten Basissteg 47 ausgestaltet ist. Der Befestigungsbereich 44 ist bevorzugt aus separaten Bauteilen zusammengesetzt, wobei der Basisschenkel 39 zusammen mit dem Lagerbereich 43 bevorzugt einstückig hergestellt werden kann. Die Befestigungsbereiche 44 lassen sich in geeigneter Weise (z.B. durch Verschraubung, Passung, Nieten oder ähnlich) an den zweiten Bereich 43 des Zapfenträgers 38 fügen.

Das elastische Kupplungselement 7 ist als Ring, zum Beispiel als Kreisring, wie dargestellt, oder als Ring vieleckiger oder polygonaler Konturierung, vorzugsweise torsionssteife, biege-elastisch bzw. axial elastisch ausgestaltet und um die Außenseite 23 der Gelenkgabeln 2 bzw. deren Gabelschenkeln 8 herum geführt, wobei der Basissteg 19 im Vergleich mit den Figuren 1 und 2 etwas länger ausgestattet ist. Der Basissteg 47 des Zapfenträgers 38 ist bevorzugt identisch zum Basissteg 19 ausgeführt. In dem dargestellten Ausführungsbeispiel weist der Basissteg 19 und auch der Basissteg 47 in etwa eine an den Ring angepaßte Ausgestaltung auf, so daß die Basisstege 19 bzw. 47 mit ihrem jeweils freien Ende 48 bündig mit einer Außenseite 49 des elastischen Kupplungselementes 7 abschließen. Vorteilhafter Weise kann das Kardangelenk 1 bei einer Ausgestaltung nach dem Figuren 4 und 5 mit einem als Ring bzw. Kreisring ausgestalteten elastischen Kupplungselement 7 kleiner ausgeführt werden als bei einer Ausgestaltung nach dem Beispiel zu den Figuren 1 und 2, wobei eine axiale Flexibilität bei gleicher Rotationssteifigkeit vergrößert werden kann. Ansonsten entspricht das Ausführungsbeispiel nach den Figuren 4 und 5 dem Ausführungsbeispiel nach den Figuren 1 und 2.

Im Unterschied zu dem in den Figuren 1 und 2 dargestellten Ausführungsbeispiel ist das elastische Kupplungselement 7 als Ring, bzw. Kreisring nicht in dem Innenraum 6, sondern außen um die jeweiligen Gelenkgabeln 2 herum angeordnet. Das elastische Kupplungselement 7 ist als torsionssteifer, biege-elastischer bzw. axial elastischer Ring, bzw. Kreisring ausgeführt.

Bei der Ausgestaltung gemäß den Figuren 4 und 5 ist das elastische Kupplungselement 7 über den Basissteg 47 des dritten Bereiches 44 mit dem Zapfenträger 38 verbunden. Als Verbindung kann bevorzugt eine Verschraubung, Vernietung, Vulkanisierung oder dergleichen vorgesehen sein.

Die Verbindung des jeweiligen elastischen Kupplungselementes 7 mit den jeweiligen Befestigungselementen 13 und Zapfenträgern 14 bzw. 38 ist in den Figuren 1 bzw. 4 mittels der strichpunktierten Achse 51 angedeutet.

Die Gelenkgabeln 2 bzw. deren Gabelschenkel 8 können entweder identisch oder wie in den Figuren. 1, 2 und 4 sowie 5 illustriert unterschiedlich zur Aufnahme der Lagerelemente 9 und 11 ausgestaltet sein.

Das in den Figuren 1, 2 und 4 sowie 5 dargestellte Kardangelenk 1 eignet sich insbesondere zur Verwendung in einer Lenksäule eines Kraftfahrzeuges. Die Wellen 3 bzw. 4 sind zueinander gefluchtet ausgerichtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 4 mittels des Inklinationswinkels 52 dargestellt.

## Patentansprüche

1. Kardangelenk, das zwei Gelenkgabeln (2) aufweist, wobei eine der Gelenkgabeln (2) mit einer angetriebenen Welle (3) bzw. Antriebswelle und die andere Gelenkgabel (2) mit einer anzutreibenden Welle (4) bzw. Abtriebswelle verbindbar bzw. verbunden ist, und wobei die beiden Gelenkgabeln (2) um 90° radial verdreht zueinander angeordnet sind, so daß die beiden Gelenkgabeln (2) einen Innenraum (6) bilden, und wobei dem Kardangelenk (1) ein elastisches Kupplungselement (7) zugeordnet ist,
**dadurch gekennzeichnet, daß**
in einer der Gelenkgabeln (2) bzw. in deren axial gegenüberliegenden Gabelschenkeln (8) jeweils ein Befestigungselement (13) drehbar gelagert ist, das einen L-förmigen Bereich (17) mit einem Quersteg (18) und einem Basissteg (19) aufweist, wobei der L-Förmige Bereich (17) in einen Zapfen (21) übergeht, der einseitig mit einem freien Ende (22) über den jeweiligen Gabelschenkel (8) übersteht, wobei dem freien Ende (22) des Zapfens (21) ein Sicherungselement (24) zugeordnet ist, und wobei in der anderen Gelenkgabel (2) ein einziger Zapfenträger (14; 38) drehbar gelagert ist, der einen Basissteg (27; 47) aufweist, der entsprechend zum Basissteg (19) des Befestigungselementes (13) ausgestaltet ist, wobei den Gelenkgabeln (2) an ihren jeweils axial gegenüberliegenden Gabelschenkeln (8) Lagerelemente (9; 11) zugeordnet sind, wobei das jeweilige Befestigungselement (13) in den Lagerelementen (9) und der Zapfenträger (14; 38) in den Lagerelementen (11) drehbar gelagert ist, und wobei das elastische Kupplungselement (7) zum einen mit dem Basissteg (19) des Befestigungselementes (13) und zum anderen mit dem Basissteg (27; 47) des einzigen Zapfenträgers (14;38) verbunden ist.

2. Kardangelenk nach Anspruch 1,
**dadurch gekennzeichnet, daß**
die den Befestigungselementen (13) zugeordneten Lagerelemente (9) derart ausgestaltet sind, daß diese ein Biegemoment aufnehmen können.

3. Kardangelenk nach Anspruch 1 oder 2,
**dadurch gekennzeichnet, daß**
die Lagerelemente (9), die den Befestigungselementen (13) zugeordnet sind, als doppelreihige Wälzlager ausgestaltet sind, wobei die dem Zapfenträger (14; 38) zugeordneten Lagerelemente (11) als einreihige Wälzlager ausgeführt sind.

4. Kardangelenk nach einem der vorhergehenden Ansprüche,
**dadurch gekennzeichnet, daß**
die Befestigungselemente (13) als Drehbolzen ausgestaltet sind.

5. Kardangelenk nach einem der vorhergehenden Ansprüche,
**dadurch gekennzeichnet, daß**
das Befestigungselement (13) mit seinem L-förmigen Bereich (17) in dem Innenraum (6) angeordnet ist.

6. Kardangelenk nach einem der vorhergehenden Ansprüche,
**dadurch gekennzeichnet, daß**
der Zapfenträger (14) quasi U-förmig ausgestaltet in dem Innenraum (6) angeordnet ist.

7. Kardangelenk nach einem der vorhergehenden Ansprüche,
**dadurch gekennzeichnet, daß**
das elastische Kupplungselement (7) als torsionssteife, biege-elastische bzw. axial elastische Scheibe ausgeführt ist, die in dem Innenraum (6) angeordnet ist.

8. Kardangelenk nach einem der Ansprüche 1 bis 4,
**dadurch gekennzeichnet, daß**
das Befestigungselement (13) mit seinem L-förmigen Bereich (17) bzw. seinem Basissteg (19) an einer Außenseite (23) der zugeordneten Gelenkgabel (2) angeordnet ist.

9. Kardangelenk nach Anspruch 8,
**dadurch gekennzeichnet, daß**
der Zapfenträger (38) mit seinem Basissteg (47) an der Außenseite (23) der zugeordneten Gelenkgabel (2) angeordnet ist.

10. Kardangelenk nach einem der Ansprüche 8 oder 9,
**dadurch gekennzeichnet, daß**
das elastische Kupplungselement (7) als torsionssteifer, biege-elastischer bzw. axial elastischer Ring ausgestaltet ist, der um die Außenseiten (23) der Gelenkgabeln (2) geführt ist und zum einen mit dem Basissteg (19) des jeweiligen Befestigungselementes (13) und zum anderen mit dem jeweiligen Basissteg (47) des Zapfenträgers (38) verbunden ist.

## Claims

1. Cardanic joint which has two joint forks (2), one of the joint forks (2) being connectable or connected to a driven shaft (3) or drive shaft and the other joint fork (2) being connectable or connected to a shaft (4) which is to be driven or output shaft, and the two joint forks (2) being arranged in a manner which is rotated radially by 90° with respect to one another, with the result that the two joint forks (2) form an inner space (6), and the cardanic joint (1) being assigned an elastic coupling element (7), **characterized in that** in each case a fastening element (13) which has an L-shaped region (17) with a transverse (18) and a base web (19) is mounted rotatably in one of the joint forks (2) or in its fork limbs (8) which lie axially opposite one another, the L-shaped region (17) merging into a journal (21) which protrudes on one side with a free end (22) beyond the respective fork limb (8), the free end (22) of the journal (21) being assigned a securing element (24), and a single journal bearer (14; 38) being mounted rotatably in the other joint fork (2), which journal bearer (14; 38) has a base web (27; 47) which is configured in accordance with the base web (19) of the fastening element (13), the joint forks (2) being assigned bearing elements (9; 11) on their fork limbs (8) which in each case lie axially opposite one another, the respective fastening element (13) being mounted rotatably in the bearing elements (9) and the journal bearer (14; 38) being mounted rotatably in the bearing elements (11), and the elastic coupling element (7) being connected firstly to the base web (19) of the fastening element (13) and secondly to the base web (27; 47) of the single journal bearer (14; 38).

2. Cardanic joint according to Claim 1, **characterized in that** the bearing elements (9) assigned to the fastening elements (13) are configured in such a way that they can absorb a bending moment.

3. Cardanic joint according to Claim 1 or 2, **characterized in that** the bearing elements (9) which are assigned to the fastening elements (13) are configured as double-row antifriction bearings, the bearing elements (11) which are assigned to the journal bearer (14; 38) being configured as single-row antifriction bearings.

4. Cardanic joint according to one of the preceding claims, **characterized in that** the fastening elements (13) are configured as pivot pins.

5. Cardanic joint according to one of the preceding claims, **characterized in that** the fastening element (13) is arranged with its L-shaped region (17) in the inner space (6).

6. Cardanic joint according to one of the preceding claims, **characterized in that** the journal bearer (14) is configured approximately as a U-shape in the inner space (6).

7. Cardanic joint according to one of the preceding claims, **characterized in that** the elastic coupling element (7) is configured as a torsion-resistant, elastically flexible or axially elastic disc which is arranged in the inner space (6).

8. Cardanic joint according to one of Claims 1 to 4, **characterized in that** the fastening element (13) is arranged with its L-shaped region (17) or its base web (19) on an outer side (23) of the assigned joint forks (2).

9. Cardanic joint according to Claim 8, **characterized in that** the journal bearer (38) is arranged with its base web (47) on the outer side (23) of the assigned joint forks (2).

10. Cardanic joint according to one Claims 8 or 9, **characterized in that** the elastic coupling element (7) is configured as a torsion-resistant, elastically flexible or axially elastic ring which is guided around the outer sides (23) of the joint forks (2) and is connected on the one hand to the base web (19) of the respective fastening element (13) and on the other hand to the respective base web (47) of the journal bearer (38).

## Revendications

1. Joint à croisillon, présentant deux fourchettes de joint (2), l'une des fourchettes de joint (2) pouvant être connectée ou étant connectée à un arbre entraîné (3) ou un arbre d'entraînement et l'autre fourchette de joint (2) pouvant être connectée ou étant connectée à un arbre à entraîner (4) ou un arbre de sortie, et les deux fourchettes de joint (2) étant disposées de manière tournée radialement de 90° l'une par rapport à l'autre, de sorte que les deux fourchettes de joint (2) forment un espace interne (6) un élément d'accouplement élastique (7) étant associé au joint à croisillon (1),
**caractérisé en ce**
**qu'**un élément de fixation (13) est à chaque fois monté à rotation dans l'une des fourchettes de joint (2) ou dans ses branches de fourchette (8) axialement opposées, l'élément de fixation (13) présentant une région en forme de L (17) avec une partie transversale (18) et une partie de base (19), la région en forme de L (17) se prolongeant par un tourillon (21), qui dépasse d'un côté avec une extrémité libre (22) au-delà de la branche de fourchette respective (8), l'extrémité libre (22) du tourillon (21) étant associée à un élément de retenue (24), et un support de tourillon unique (14 ; 38) étant monté à rotation dans l'autre fourchette de joint (2), et présentant une partie de base (27 ; 47) qui est configurée de manière correspondant à la partie de base (19) de l'élément de fixation (13), des éléments de palier (9 ; 11) étant associés aux fourchettes de joint (2) au niveau de leurs branches de fourchettes (8) à chaque fois opposées axialement, l'élément de fixation respectif (13) étant monté à rotation dans les éléments de palier (9) et le support de tourillon (14 ; 38) étant monté à rotation dans les éléments de palier (11), et l'élément d'accouplement élastique (7) étant connecté d'une part à la partie de base (19) de l'élément de fixation (13) et d'autre part à la partie de base (27 ; 47) du support de tourillon unique (14 ; 38).

2. Joint à croisillon selon la revendication 1,
**caractérisé en ce que**
les éléments de palier (9) associés aux éléments de fixation (13) sont configurés de telle sorte qu'ils puissent recevoir un couple de flexion.

3. Joint à croisillon selon la revendication 1 ou 2,
**caractérisé en ce que**
les éléments de palier (9) qui sont associés aux éléments de fixation (13) sont configurés sous forme de paliers à roulements à deux rangées, les éléments de palier (11) associés au support de tourillon (14 ; 38) étant réalisés sous forme de paliers à roulement à une rangée.

4. Joint à croisillon selon l'une quelconque des revendications précédentes,
**caractérisé en ce que**
les éléments de fixation (13) sont réalisés sous forme de goupilles.

5. Joint à croisillon selon l'une quelconque des revendications précédentes,
**caractérisé en ce que**
l'élément de fixation (13) est disposé avec sa région en forme de L (17) dans l'espace interne (6).

6. Joint à croisillon selon l'une quelconque des revendications précédentes,
**caractérisé en ce que**
le support de tourillon (14) est configuré quasiment en forme de U et est disposé dans l'espace interne (6).

7. Joint à croisillon selon l'une quelconque des revendications précédentes,
**caractérisé en ce que**
l'élément d'accouplement élastique (7) est réalisé sous forme de disque rigide en torsion, flexible élastique ou élastique axialement, qui est disposé dans l'espace interne (6).

8. Joint à croisillon selon l'une quelconque des revendications 1 à 4,
**caractérisé en ce que**
l'élément de fixation (13) est disposé avec sa région en forme de L (17) ou avec sa partie de base (19) sur un côté extérieur (23) de la fourchette de joint (2) associée.

9. Joint à croisillon selon la revendication 8,
**caractérisé en ce que**
le support de tourillon (38) est disposé avec sa partie de base (47) sur le côté extérieur (23) de la fourchette de joint (2) associée.

10. Joint à croisillon selon l'une quelconque des revendications 8 ou 9,
**caractérisé en ce que**
l'élément d'accouplement élastique (7) est réalisé sous forme de bague rigide en torsion, flexible élastique ou élastique axialement, qui est guidée autour des côtés extérieurs (23) des fourchettes de joint (2) et qui est connectée d'une part à la partie de base (19) de l'élément de fixation respectif (13) et d'autre part à la partie de base respective (47) du support de tourillon (38).
